Europäisches Patentamt

European Patent Office

Office européen des brevets

(19)

(11) Veröffentlichungsnummer : **0 081 454**
**B1**

(12) **EUROPÄISCHE PATENTSCHRIFT**

(45) Veröffentlichungstag der Patentschrift :
18.06.86

(21) Anmeldenummer : 82730138.3

(22) Anmeldetag : 23.11.82

(51) Int. Cl.⁴ : **G 01 D 5/34, G 01 L 9/00**

(54) Einrichtung zum Messen physikalischer Grössen mit einem optischen Sensor.

(30) Priorität : 04.12.81 DE 3148738

(43) Veröffentlichungstag der Anmeldung :
15.06.83 Patentblatt 83/24

(45) Bekanntmachung des Hinweises auf die Patenterteilung : 18.06.86 Patentblatt 86/25

(84) Benannte Vertragsstaaten :
AT BE CH DE FR GB LI

(56) Entgegenhaltungen :
DE-A- 2 905 630
DE-A- 2 920 489
US-A- 3 783 277
US-A- 3 898 454
ELECTRO-TECHNOLOGY, Band 72, November 1963, Heft 5, Seiten 120,121, London, G.B. W.R. KETTERER et al.: "Photocell technique for linear measurements"

(73) Patentinhaber : **Siemens Aktiengesellschaft
Berlin und München Wittelsbacherplatz 2
D-8000 München 2 (DE)**

(72) Erfinder : **Schulz, Winfried, Dr. Ing.
Kurfürstenstrasse 29
D-1000 Berlin 42 (DE)**

EP 0 081 454 B1

**Beschreibung**

Die Erfindung bezieht sich auf eine Einrichtung zum Messen physikalischer Größen mit einer von der zu messenden physikalischen Größe gesteuerten Blende eines Sensors, der über zwei Lichtleiter mit einer opto-elektronischen Sendeeinrichtung und mit einer opto-elektronischen Empfangseinrichtung gekoppelt ist, wobei die Empfangseinrichtung zwei Empfangsdioden aufweist, die in optischer Verbindung mit den Lichtleitern stehen, und einen Schaltungsteil zur Summen- und Differenzbildung enthält, dessen einer ein bei der Summenbildung erzeugtes elektrisches Signal führender Ausgang unter Bildung eines Regelkreises mit einem Steuereingang einer dem Schaltungsteil vorgeordneten Verstärkereinheit verbunden ist und dessen weiterer ein bei der Differenzbildung erzeugtes weiteres elektrisches Signal führender Ausgang an eine Anzeigevorrichtung angeschlossen ist.

Bei einer bekannten Einrichtung dieser Art (DE-A-28 49 186) enthält die Sendeeinrichtung eine einzige Sendediode, die über eine Lichtleiterfaser Licht einer optischen Koppelstelle zuführt, von der es weiter über einen Lichtleiter zu dem Sensor geführt ist. Von dem Sensor wird durch einen entsprechend der physikalischen Größe beweglichen Spiegel ein Teil des Lichtes über den Lichtleiter wieder zur optischen Koppelstelle zurückgeführt, von der es einer Empfangsdiode der optoelektronischen Empfangseinrichtung zugeführt wird. Ein anderer Teil des dem Sensor zugeführten Lichtes gelangt an dem beweglichen Spiegel vorbei in den weiteren Lichtleiter und wird über diesen einer weiteren Empfangsdiode der opto-elektronischen Empfangseinrichtung zugeführt. Den beiden Empfangsdioden ist eine Verstärkereinheit nachgeordnet, die aus jeweils einem Verstärker mit nachgeschaltetem Regelverstärker besteht. Die Ausgänge der Regelverstärker sind einem Schaltungsteil zur Summen- und Differenzbildung zugeführt, in dem zwei elektrische Signale gebildet sind. Das eine elektrische Signal entspricht der Summe der von den Empfangsdioden erzeugten elektrischen Signale und wird dazu benutzt, die regelbaren Verstärker der Verstärkereinheit so zu steuern, daß die Summe der von den Empfangsdioden erzeugten elektrischen Signale stets konstant ist. Ein weiteres elektrisches Signal des Schaltungsteils zur Summen- und Differenzbildung entspricht der Differenz der von den Empfangsdioden erzeugten elektrischen Signale und stellt daher ein Maß für die physikalische Größe dar, die demzufolge an einer nachgeordneten Anzeigevorrichtung ablesbar ist. Die einzige Sendediode der opto-elektronischen Sendeeinrichtung wird mit einem konstanten Strom gespeist.

Es ist weiterhin aus der DE-OS 29 20 489 eine Meßeinrichtung mit ebenfalls einem über zwei Lichtleiter mit einer opto-elektronischen Sendeeinrichtung und einer opto-elektronischen Empfangseinrichtung gekoppelten Sensor bekannt. Um den Einfluß von Instabilitäten der optischen Übertragungseigenschaften der Lichtleiter auf das Meßergebnis der Meßeinrichtung zu unterdrücken, enthält die Sendeeinrichtung der bekannten Meßeinrichtung zwei abwechselnd impulsweise gesteuerte Sendedioden, die jeweils Licht unterschiedlicher Wellenlänge emittieren. Beide Sendedioden sind gemeinsam über einen Lichtleiter mit dem Sensor gekoppelt, der über den anderen Lichtleiter mit einer Empfangsdiode in der Empfangseinrichtung in Verbindung steht. In einem Schaltkreis zur Amplitudenregelung der Sendedioden liegt eine weitere Empfangsdiode, die zur unmittelbaren Erfassung des von den Sendedioden emittierten Lichtes an dem einen Lichtleiter angekoppelt ist. Der Sensor enthält ein optisches Filter, dessen Absorptions-, Transmissions- oder Reflexionsvermögen im Wellenbereich des von den Sendedioden emittierten Lichtes in Abhängigkeit von der zu messenden physikalischen Größe variabel ist. Da die Spektralverteilungen der Sendedioden die Abhängigkeit des Meßergebnisses von der zu messenden physikalischen Größe wesentlich beeinflussen, ist eine Temperaturstabilisierung der Sendedioden vorgesehen.

Eine ähnliche Meßeinrichtung, die ebenfalls zwei abwechselnd impulsweise gesteuerte, verschiedenfarbiges Licht abgebende Sendedioden, einen Sensor mit einem optischen Filter und zwei Empfangsdioden aufweist, ist in der DE-OS 29 05 489 beschrieben.

Bei der Übertragung verschiedenfarbigen Lichtes entlang von Lichtleitungen ist zu beachten, daß der Dämpfungsverlauf je nach Lichtleitertyp wellenlängenabhängig ist. Außerdem ist auch die Spektralverteilung sowohl bei verschiedenfarbiges Licht aussendenden Sendedioden als auch bei optischen Filtern temperaturabhängig.

Die Erfindung geht von der eingangs angegebenen Einrichtung aus, die einen Sensor mit steuerbarer Blende enthält, wobei der Erfindung die Aufgabe zugrunde liegt, eine Einrichtung zum Messen physikalischer Größen mit zwei Lichtleitern zwischen Sende- und Empfangseinrichtung einerseits und einem Sensor andererseits vorzuschlagen, bei der Veränderungen des Übertragungsweges im Bereich der Lichtleiter keinen Einfluß auf das Meßergebnis haben.

Zur Lösung dieser Aufgabe enthält bei einer Einrichtung der eingangs angegebenen Art erfindungsgemäß die opto-elektronische Sendeeinrichtung zwei abwechselnd impulsweise gesteuerte, gleichfarbiges Licht emittierende Sendedioden, die mit jeweils einem der Lichtleiter gekoppelt sind ; die Empfangsdioden sind mit den Lichtleitern über optische Koppelelemente derart verbunden, daß die eine Empfangsdiode mit unmittelbar von den Sendedioden abgegebenem Licht und die andere Empfangsdiode mit Licht beaufschlagt ist, das den Sensor durchlaufen hat, und die Lichtleiter laufen an ihren dem Sensor zugewandten Ende in jeweils zwei Lichtleiterenden aus, wobei das eine Lichtleiterende des einen Lichtleiters über eine Sammellinsenanordnung und eine mit der Bewegung der Blende sich öffnende

2

0 081 454

Lichtdurchtrittsöffnung im Sensor mit einem Lichtleiterende des weiteren Lichtleiters und das andere Lichtleiterende des weiteren Lichtleiters über eine Sammellinsenanordnung und eine mit der Bewegung der Blende sich schließende weitere Lichtdurchtrittsöffnung im Sensor mit dem anderen Lichtleiterende des einen Lichtleiters optisch gekoppelt ist ; die eine Empfangsdiode ist in einem Schaltkreis zur Amplitudenregelung der Sendedioden angeordnet, und die andere Empfangsdiode ist der Verstärkereinheit des Schaltungsteils zur Summen- und Differenzbildung vorgeordnet.

Ein wesentlicher Vorteil der erfindungsgemäßen Einrichtung besteht darin, daß bei ihr Änderungen der Übertragungseigenschaften im Bereich der beiden Lichtleiter ohne Einfluß auf das Meßergebnis bleiben. Dies ist u. a. darauf zurückzuführen, daß bei der erfindungsgemäßen Einrichtung das jeweils von den Sendedioden ausgesandte Licht gleicher Frequenz durch beide Lichtleiter übertragen wird ; hinzu kommt die spezielle Lichtführung im Bereich des Sensors, die dort für das jeweils über die Sammellinsenanordnung von der jeweils Licht aussendenden Sendediode abgegebene Licht einen « Lichtgleichrichter » bildet, so daß sich in der erfindungsgemäßen Einrichtung gewissermaßen zwei antiparallel geschaltete « Lichtgleichrichter » in optischer Reihenschaltung mit sich bei einer Bewegung der Blende in jeweils entgegengesetztem Sinne verändernden Lichtdurchtrittsöffnungen ergeben. Infolge der Amplitudenregelung für die beiden Sendedioden ist dabei sichergestellt, daß diese stets Licht gleicher Intensität aussenden. Die der weiteren Empfangsdiode nachgeordnete Schaltung sorgt dafür, daß infolge Quotientenbildung aus der Differenz von über die beiden Lichtleiter kommenden Lichtimpulsen entsprechenden elektrischen Signalen und der Summe dieser Signale eine Meßgröße in Form eines elektrischen Signals der Anzeigevorrichtung zugeführt wird, die ein genaues Maß für die zu messende physikalische Größe darstellt.

Bei einer vorteilhaften Ausführung der erfindungsgemäßen Einrichtung ist der anderen Empfangsdiode eine weitere Empfangsdiode zugeordnet, und die andere Empfangsdiode ist mit dem einen Lichtleiter und die weitere Empfangsdiode mit dem anderen Lichtleiter optisch gekoppelt ; die andere und die weitere Empfangsdiode sind über eine entsprechend der impulsweisen Steuerung der Sendedioden betätigte elektronische Umschaltanordnung mit dem Eingang der Verstärkereinheit verbunden. Der besondere Vorteil dieser Ausführungsform der erfindungsgemäßen Einrichtung besteht darin, daß sie die Gewinnung eines besonders genauen Meßergebnisses gestattet, weil bei dieser Ausführungsform auch Lichtreflexionen kompensiert werden, die vom Lichtleiterende sowie von allen Inhomogenitäten und Verbindungsstellen verursacht werden. Dabei wird es als besonders zweckmäßig angesehen, wenn die andere Empfangsdiode und die weitere Empfangsdiode so ausgesucht sind, daß sie gleiche Eigenschaften aufweisen ; darüberhinaus erscheint es zweckmäßig, wenn die beiden Empfangsdioden gleichen Temperaturänderungen ausgesetzt, also thermisch gekoppelt sind.

Gegebenenfalls kann auch die eine Empfangsdiode so ausgesucht sein, daß sie in ihren Eigenschaften mit der anderen und der weiteren Empfangsdiode übereinstimmt ; auch eine thermische Kopplung dieser einen Empfangsdiode mit den beiden anderen Empfangsdioden erscheint zweckmäßig.

Bei der erfindungsgemäßen Einrichtung sind die Sendedioden vorteilhafterweise an einen Steuergenerator angeschlossen, und der Schaltungsteil zur Summen- und Differenzbildung enthält drei phasenempfindliche Gleichrichter ; die Steuereingänge der phasenempfindlichen Gleichrichter sind mit dem Steuergenerator verbunden.

Es hat sich ferner als vorteilhaft erwiesen, wenn die Blende der erfindungsgemäßen Einrichtung auf einem der physikalischen Größe entsprechend bewegbaren Prisma gehalten ist und die Lichtleiterenden einer Seite (Hypothenuse) des Prismas gegenüberliegen. Eine solche Anbringung der Blende ist besonders dann vorteilhaft, wenn — beispielsweise aus räumlichen Gründen — die Lichtleiterenden nicht beiderseits der Blende angeordnet werden können.

Bei der erfindungsgemäßen Einrichtung wird es ferner als vorteilhaft angesehen, wenn zwischen dem Prisma und den Lichtleiterenden eine weitere Blende räumlich fest angeordnet ist, die diametral einander gegenüberliegende, lichtundurchlässige Bereiche aufweist, und wenn im Bewegungsbereich der beweglichen Blende die beiden Lichtdurchtrittsöffnungen liegen. Dies hat den Vorteil, daß auch bei einer nicht exakt translatorischen Verstellung der Blende ein weitgehend gleichförmiges entgegengesetztes Verändern der Lichtdurchtrittsöffnungen erfolgt.

Die erfindungsgemäße Einrichtung läßt sich zum Erfassen sehr unterschiedlicher physikalischer Größen benutzen, sofern sich nur mit der jeweiligen physikalischen Größe die Einstellung einer Blende ändern läßt.

Eine besonders vorteilhafte Anwendung der erfindungsgemäßen Einrichtung zum Messen eines Druckes oder einer Druckdifferenz wird darin gesehen, daß eine über zwei einen Innenraum begrenzende Trennmembranen gegen eine Meßfeder dem Druck oder der Druckdifferenz entsprechend verstellte Koppelstange das Prisma trägt und daß der Innenraum im Bereich des Prismas nach außen durch eine druckfeste Glasdurchführung abgeschlossen ist, bis an die die Lichtleiterenden von außen herangeführt sind. Auf diese Weise läßt sich nämlich mit der erfindungsgemäßen Einrichtung ein Druck oder eine Druckdifferenz auch dann messen, wenn am Orte der Messung eine starke örtliche Störbelastung vorhanden ist, die beispielsweise durch eine starke $\gamma$-Strahlung, durch hohe Temperatur, hohe Feuchte, durch eine explosionsgefährdete Atmosphäre oder durch elektromagnetische Felder hervorgerufen sein kann. Im Bereich der Meßstelle befindet sich dann nämlich nur noch der Sensor mit einem Teil der beiden Lichtleiter, während die Sende- und die Empfangseinrichtung mit elektronischen Bauelementen über die

3

störunempfindlichen weiteren Teile der Lichtleiter von der Störbelastung entfernt angeordnet sind, sich also außerhalb des Störbereichs befinden.

Zur Erläuterung der Erfindung ist in

Figur 1 ein Ausführungsbeispiel der erfindungsgemäßen Einrichtung in schematischer Darstellung, in

Figur 2 eine Aufsicht auf ein Ausführungsbeispiel des Sensors der Einrichtung nach Figur 1, in

Figur 3 ein Teil der Empfangseinrichtung eines weiteren Ausführungsbeispiels der erfindungsgemäßen Einrichtung, in

Figur 4 ein Diagramm zur Erläuterung der Arbeitsweise der Sendedioden der Sendeeinrichtung, in

Figur 5 ein Ausführungsbeispiel eines « Lichtgleichrichters », in

Figur 6 ein weiteres Ausführungsbeispiel eines « Lichtgleichrichters » und in

Figur 7 ein bevorzugtes Ausführungsbeispiel der erfindungsgemäßen Einrichtung dargestellt.

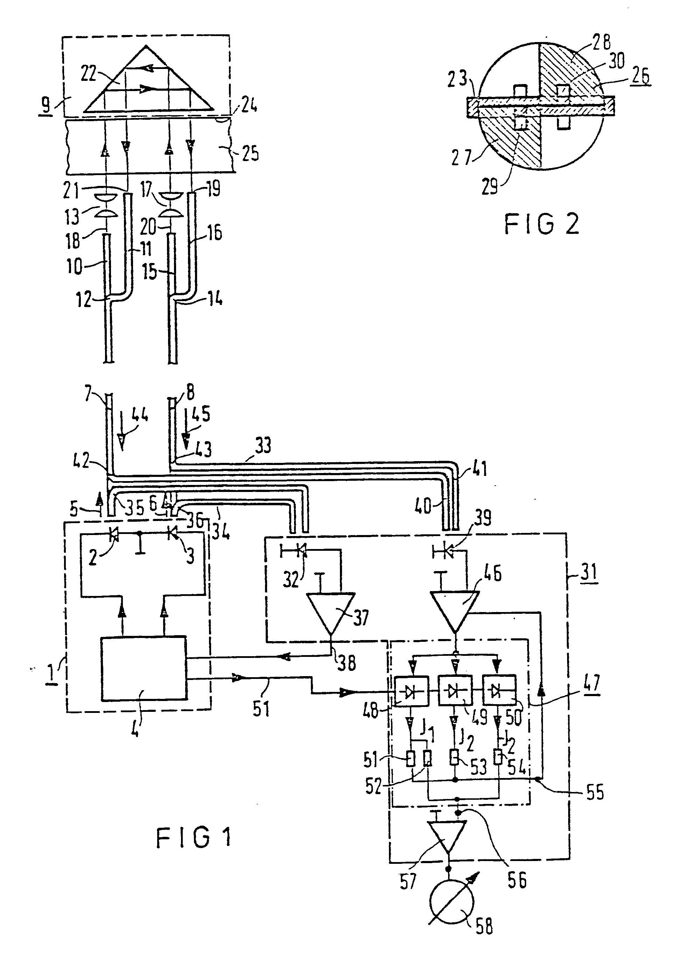

Das Ausführungsbeispiel nach Figur 1 enthält eine Sendeeinrichtung 1, die eine Sendediode 2 und eine weitere Sendediode 3 enthält. Beide Sendedioden 2 und 3 sind mit einem Steuergenerator 4 verbunden, der dafür sorgt, daß die beiden Sendedioden 2 und 3 jeweils abwechselnd nacheinander Lichtimpulse in Richtung der Pfeile 5 und 6 in Lichtleiter 7 und 8 senden.

Der Lichtleiter 7 läuft in der Nähe eines Sensors 9 in zwei Lichtleiterenden 10 und 11 aus : beide Lichtleiterenden 10 und 11 sind an einer Koppelstelle 12 miteinander verbunden. Zwischen dem einen Lichtleiterende 10 und dem Sensor 9 ist eine Sammellinsenanordnung 13 vorgesehen. Entsprechend ist der optische Übertragungsweg über den weiteren Lichtleiter 8 ausgestaltet, indem sich auch dieser Lichtleiter an einer optischen Koppelstelle 14 in ein Lichtleiterende 15 und ein anderes Lichtleiterende 16 aufteilt. Zwischen dem einen Lichtleiterende 15 und dem Sensor 9 liegt eine weitere Sammellinsenanordnung 17.

Die Sammellinsenanordnung 13 ist so plaziert und bemessen, daß der aus dem einen Lichtleiterende 10 des einen Lichtleiters 7 austretende Lichtimpuls 18 auf die Stirnseite 19 des anderen Lichtleiterendes 16 des weiteren Lichtleiters 8 fokussiert wird. Entsprechendes gilt hinsichtlich der Sammellinsenanordnung 17, mit der eine Fokussierung des aus dem einen Lichtleiterende 15 des weiteren Lichtleiters 8 austretenden Lichtimpulses 20 auf die Stirnseite 21 des anderen Lichtleiterendes 11 des einen Lichtleiters 7 bewirkt ist.

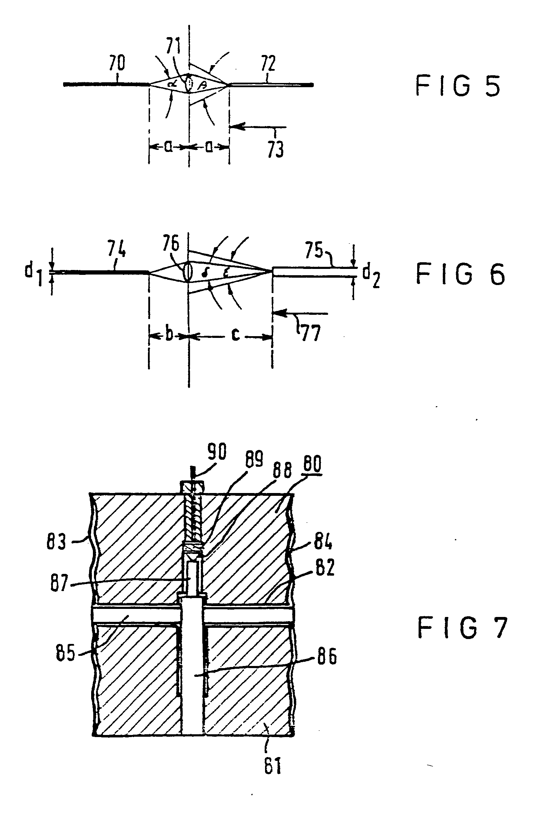

Durch diese Anordnung der Lichtführung im Bereich des Sensors 9 ist erreicht, daß das von der Sendediode 2 ausgesandte Licht nahezu ausschließlich nur über das eine Lichtleiterende 10 des einen Lichtleiters 7, den Sensor 9 und das andere Lichtleiterende 16 des weiteren Lichtleiters 8 geführt ist und daß von der Sendediode 3 ausgesandtes Licht nur über das eine Lichtleiterende 15 des weiteren Lichtleiters 8, den Sensor 9 und das andere Lichtleiterende 11 des einen Lichtleiters 7 verläuft. Der Lichtübertragungsweg vom anderen Lichtleiterende 11 über das Prisma 22 und die Sammellinsenanordnung 17 zum Lichtleiterende 15 wirkt nämlich wie ein in Sperrichtung betriebener « Lichtgleichrichter », wie anhand der Figuren 5 und 6 unten näher erläutert ist. Entsprechendes gilt für das Licht, das vom anderen Lichtleiterende 16 zum einen Lichtleiterende 10 gelangen will.

Der Sensor 9 besteht aus einem Prisma 22, das in einer Richtung senkrecht zur Zeichenebene in nicht dargestellter Weise durch die zu messende physikakische Größe bewegbar ist. Auf dem Prisma befindet sich eine Blende 23, die somit gemeinsam mit dem Prisma 22 und damit entsprechend dem Betrage der physikalischen Größe bewegt wird. Vor dem Prisma, beispielsweise an einer Fläche 24 einer Glasscheibe 25 ist ortsfest eine weitere Blende 26 angebracht, die — wie Figur 2 zeigt — einander diametral gegenüberliegende lichtundurchlässige Bereiche 27 und 28 aufweist. Jeder dieser lichtundurchlässigen Bereiche 27 und 28 ist mit einer Lichtdurchtrittsöffnung 29 und 30 versehen, wobei in den beiden Endstellungen der beweglichen Blende 23 entweder die Lichtdurchtrittsöffnung 29 oder die Lichtdurchtrittsöffnung 30 verschlossen ist. In der dargestellten Lage befindet sich die bewegliche Blende 23 in einer Nullstellung, in der durch beide Lichtdurchtrittsöffnungen 29 und 30 gleichviel Licht hindurchtreten kann.

Die Empfangseinrichtung 31 enthält eine Empfangsdiode 32, mit der zusätzliche Lichtleiter 33 und 34 optisch gekoppelt sind. Diese zusätzlichen Lichtleiter 33 und 34 führen über optische Koppelstellen 35 und 36 einen Teil des jeweils von den Sendedioden 2 und 3 abgegebenen Lichtes unmittelbar der einen Empfangsdiode 32 zu. Die Empfangsdiode 32 empfängt somit Lichtimpulse mit einer Intensität, die der Intensität der jeweils von den Sendedioden 2 und 3 ausgesandten Lichtimpulse entspricht. Das von der Empfangsdiode 32 abgegebene elektrische Signal wird in einem Verstärker 37 verstärkt und über eine Verbindungsleitung 38 dem Steuergenerator 4 zugeführt. Der Steuergenerator sorgt für eine entsprechende Ansteuerung der Sendedioden 2 bzw. 3, so daß durch die zusätzlichen Lichtleiter 33 und 34 die Empfangsdiode 32 und den Verstärker 37 mittels des Steuergenerators 4 eine Regelung derart geschaffen ist, daß die Sendedioden 2 und 3 stets Lichtimpulse gleichbleibender Intensität aussenden.

Die Empfangseinrichtung 31 enthält eine weitere Empfangsdiode 39, die über Hilfslichtleiter 40 und 41 sowohl mit dem einen Lichtleiter 7 als auch mit dem weiteren Lichtleiter 8 über Koppelstellen 42 und 43 verbunden ist. Dabei sind die Koppelstellen 42 und 43 so ausgelegt, daß der weiteren Empfangsdiode 39 über die Hilfslichtleiter 40 und 41 jeweils nur Lichtimpulse zugeführt werden, die in Richtung der Pfeile 44 und 45 verlaufen.

Die auf diese Lichtimpulse hin von der weiteren Empfangsdiode 39 erzeugten elektrischen Signale werden einer Verstärkereinheit 46 zugeführt, der ein Schaltungsteil 47 zur Summen- und Differenzbildung nachgeordnet ist. In diesem Schaltungsteil 47 sind drei phasenempfindliche Gleichrichter 48, 49 und 50 angeordnet, deren Eingänge gemeinsam mit dem Ausgang der Verstärkereinheit 46 verbunden sind ; außerdem sind sie mit ihren Steuereingängen an einen weiteren Steuerausgang des Steuergenerators 4 angeschlossen. Die phasenempfindlichen Gleichrichter können beispielsweise so ausgebildet sein, wie es in dem Buch « Elektrische Meßtechnik » 1976, Seite 132 beschrieben ist. Am Ausgang des phasenempfindlichen Gleichrichters 48 entsteht dann ein Strom $J_1$, der beispielsweise der Intensität des durch die eine Lichtdurchtrittsöffnung 29 durchgelaufenen — von der Sendediode 2 abgegebenen — Lichtimpulses proportional ist, während am Ausgang des phasenempfindlichen Gleichrichters 49 ein Strom $J_2$ einer Größe auftritt, die der Intensität des — von der anderen Sendediode 3 abgegebenen — Lichtimpulses durch die andere Lichtdurchtrittsöffnung 30 proportional ist. Am Ausgang des phasenempfindlichen Gleichrichters 50 tritt ein Strom — $J_2$ auf. Infolge der dargestellten Verknüpfung der Ausgänge der phasenempfindlichen Gleichrichter 48 bis 50 über Widerstände 51, 52, 53 und 54 ergibt sich an einem Ausgang 55 des Schaltungsteiles 47 ein elektrisches Signal, das der Summe von $J_1$ und $J_2$ entspricht. An einem weiteren Ausgang 56 des Schaltungsteiles 47 tritt ein elektrisches Signal auf, das der Differenz $J_1$-$J_2$ entspricht. An diesem Ausgang 56 ist über einen Verstärker 57 eine Anzeigevorrichtung 58 angeschlossen. Die Anzeige der Anzeigevorrichtung 58 ist ein Maß für die zu messende physikalische Größe, weil der Ausgang 55 des Schaltungsteiles 47 an einen Steuereingang der Verstärkereinrichtung 46 zurückgeführt ist, wodurch eine Regelung bewirkt ist, mir der die Summe aus $J_1$ und $J_2$ konstant gehalten ist.

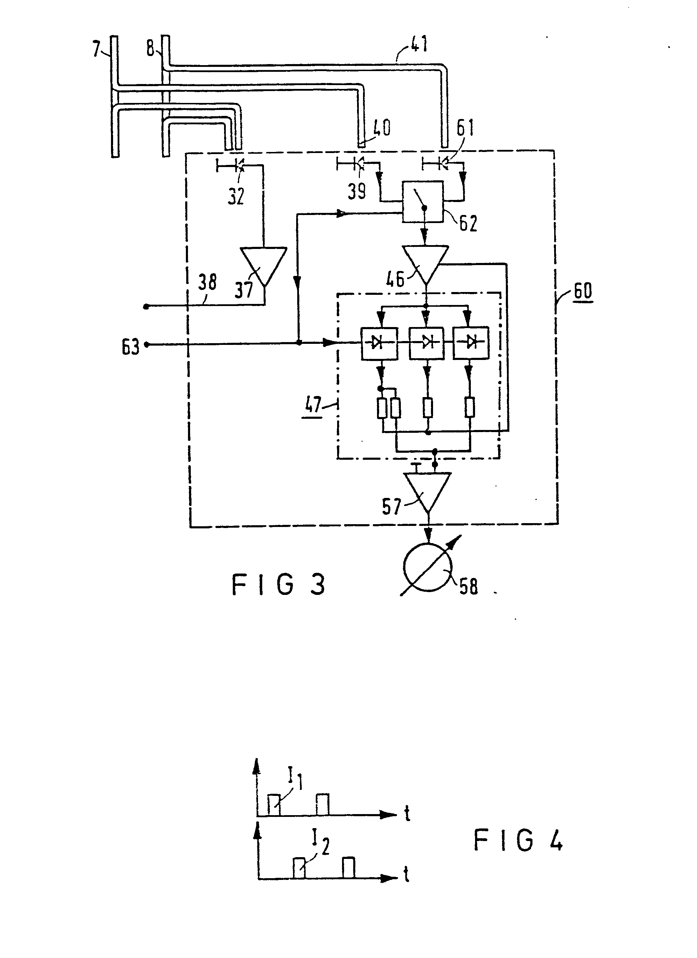

Die in Figur 3 dargestellte Empfangseinrichtung 60 unterscheidet sich von der nach Figur 1 im wesentlichen dadurch, daß der anderen Empfangsdiode 39 eine weitere Empfangsdiode 61 zugeordnet ist ; die andere Empfangsdiode 39 ist lediglich mit dem Hilfslichtleiter 40 und die weitere Empfangsdiode 61 lediglich mit dem Hilfslichtleiter 41 optisch gekoppelt. Beide Empfangsdioden 39 und 61 sind mit einer elektronischen Umschaltanordnung 62 verbunden, die über einen Anschluß 63 von dem in der Figur 3 nicht dargestellten Steuergenerator der Sendeeinrichtung betätigt wird. Der elektronischen Umschaltanordnung 62 sind die Verstärkereinheit 46, der Schaltungsteil 47 zur Summen- und Differenzbildung sowie der Verstärker 57 mit nachgeordneter Anzeigevorrichtung 58 in einer Weise nachgeschaltet, wie dies bereits im Zusammenhang mit der Erläuterung der Figur 1 eingehend dargelegt worden ist.

Die Einrichtung nach den Figuren 1 bis 3 arbeitet in folgender Weise :

Gesteuert von dem Steuergenerator 4 werden die Sendedioden 2 und 3 abwechselnd zur Abgabe von Lichtimpulsen in einer Weise veranlaßt, wie dies aus Figur 4 ersichtlich ist. Der Lichtimpuls $I_1$ der Sendediode 2 durchläuft den Lichtleiter 7 in Richtung des Pfeiles 5 und gelangt über das eine Lichtleiterende 10, die Sammellinsenanordnung 13 und die eine Lichtdurchtrittsöffnung 29 nach Durchlaufen des Prismas 22 in das andere Lichtleiterende 16 des weiteren Lichtleiters 8. Licht des Lichtimpulses $I_1$, das an der Koppelstelle 12 auch über das andere Lichtleiterende 12 und den Sensor zum einen Lichtleiterende 15 des weiteren Lichtleiters 8 gelangt, ist vernachlässigbar, weil dieser eben beschriebene optische Übertragungsweg für das Licht nahezu gesperrt ist. Die Sperrung ist darauf zurückzuführen, daß das Licht auf diesem Übertragungsweg entsprechend dem Quotienten

$$\left(\tan\frac{\alpha}{2}\middle/\tan\frac{\beta}{2}\right)^2 .$$

abgeschwächt ist, wobei $\alpha$ den Aperturwinkel am Lichtleiterende 11 und $\beta$ den Aperturwinkel des Lichtleiterendes 15 bezeichnet.

Dieser Sachverhalt wird im folgenden anhand der Figuren 5 und 6 näher erlautert.

Der in Figur 5 dargestellte « Lichtgleichrichter » besteht aus einem Lichtleiterteil 70, einer Sammellinsenanordnung 71 und einem weiteren Lichtleiterteil 72. Der Lichtleiterteil 70 hat einen Aperturwinkel $\alpha$ und der weitere Lichtleiterteil 72 einen Aperturwinkel $\beta$ ; beide Lichtleiterteile 70 und 72 haben den gleichen Abstand a von der Sammellinsenanordnung. Die Abschwächung (Sperrwirkung) von in Richtung des Pfeiles 73 gesendetem Licht im empfangenden Lichtleiterteil 70 beträgt dann

$$\left(\tan\frac{\alpha}{2}\middle/\tan\frac{\beta}{2}\right)^2 .$$

Dabei können die unterschiedlichen Aperturwinkel mit gleichartigen Lichtleitern dadurch erreicht werden, daß dem einen Lichtleiterteil 70 eine Sammellinse und dem weiteren Lichtleiterteil 72 eine Zerstreuungslinse vorgeordnet wird.

Bei dem weiteren Ausführungsbeispiel eines « Lichtgleichrichters » nach Figur 6 weist der eine Lichtleiterteil 74 einen im Vergleich zum Durchmesser $d_2$ des weiteren Lichtleiterteils 75 kleinen Durchmesser $d_1$ auf ; der eine Lichtleiterteil 74 endet im Abstand b vor der Sammellinsenanordnung 76, während der weitere Lichtleiterteil 75 im Abstand c von ihr angeordnet ist. Wird

$$\frac{d_2}{d_1} \geqslant \frac{c}{b}$$

gewählt, dann erfährt in Richtung des Pfeiles 77 laufendes Licht die Abschwächung

$$\left( \tan \frac{\delta}{2} \Big/ \tan \frac{\varepsilon}{2} \right)^2 = \left( \frac{b}{c} \right)^2 = \left( \frac{d_1}{d_2} \right)^2$$

unter der Voraussetzung, daß der Lichtstrom in beiden Lichtleiterteilen gleich groß ist.

Es ist ferner möglich, einen Lichtgleichrichter so aufzubauen, daß er eine Kombination der Ausführung nach den Figuren 5 und 6 darstellt.

Bezogen auf die Figur 1 stellt der eine Leiterteil 70 bzw. 74 das eine Lichtleiterende 11 des einen Lichtleiters 7 und das eine Lichtleiterende 15 des weiteren Lichtleiters 8 und der weitere Lichtleiterteil 72 bzw. 75 das andere Lichtleiterende 16 des weiteren Lichtleiters 8 und das andere Lichtleiterende 11 des einen Lichtleiters 7 dar.

Es gelangt somit über den weiteren Lichtleiter 8 und über den Hilfslichtleiter 41 in die Empfangsdiode 39 bzw. 61 nur ein Lichtimpuls mit einer Intensität, die ein Maß für die Öffnung der Lichtdurchtrittsöffnung 29 und damit für die physikalische Größe ist. Wird danach von der weiteren Sendediode 3 ein Lichtimpuls $I_2$ in Richtung des Pfeiles 6 in den weiteren Lichtleiter 8 gesendet, dann gelangt in den Lichtleiter 7 über das eine Lichtleiterende 15, die Sammellinsenanordnung 17 und den Sensor 9 wirksam nur Licht mit einer Intensität, die der wirksamen Öffnung der Lichtdurchtrittsöffnung 30 entspricht. Das Licht wird über den Hilfslichtleiter 40 ausgekoppelt und der Empfangsdiode 39 zugeführt. Das von der Empfangsdiode 39 bzw. 61 jeweils abgegebene elektrische Signal entspricht in seiner Größe demzufolge der jeweils wirksamen Öffnung der Lichtdurchtrittsöffnung 29 und 30 des Sensors 9, ist aber noch beeinflußt von Änderungen im Übertragungsweg im Bereich der Lichtleiter 7 und 8.

Diese störenden Beeinflussungen werden dadurch beseitigt, daß zu ihrer Eliminierung der Quotient

$$\frac{J_1 - J_2}{J_1 + J_2}$$

gebildet wird. Durch Regelung der Summe $J_1 + J_2$ = konstant in der Empfangseinrichtung 31 bzw. 60 ergibt sich, daß das Ausgangssignal dann nur noch von der Differenz $J_1 - J_2$ abhängig ist. Dieses Signal ist dann auch ein Maß für die physikalische Größe, und zwar unabhängig von Störungen im optischen Übertragungsweg im Bereich der Lichtleiter 7 und 8.

In Figur 7 ist die Anwendung der erfindungsgemäßen Einrichtung im Rahmen eines Gerätes 80 zur Druckdifferenzmessung dargestellt. Das Gerät 80 enthält einen Mittelkörper 81, der mit einer zentralen Durchgangsbohrung 82 versehen ist. An den beiden Stirnseiten des Mittelkörpers 81 ist jeweils eine Trennmembran 83 und 84 angebracht. Die beiden Trennmembranen 83 und 84 sind mit unterschiedlich hohen Drücken beaufschlagt, so daß eine mit den beiden Trennmembranen 83 und 84 verbundene Koppelstange 85 entsprechend der Druckdifferenz axial gegen die Kraft eines Meßfederstabes 86 verstellt wird. Die Verstellung der Koppelstange 85 macht das auf einer Stange 87 befestigte Prisma 88 eines optischen Sensors mit, der im einzelnen so ausgeführt ist, wie es anhand der Figuren 1 und 2 näher erläutert ist. Bis an eine druckdichte Glasdurchführung 89 sind Lichtleiter 90 geführt. Bei diesen Lichtleitern handelt es sich um die Lichtleiter 7 und 8 nach Figur 1 mit ihren Lichtleiterenden.

**Patentansprüche**

1. Einrichtung zum Messen physikalischer Größen mit einer von der zu messenden physikalischen Größe gesteuerten Blende (23) eines Sensors (9), der über zwei Lichtleiter (7, 8) mit einer opto-elektronischen Sendeeinrichtung (1) und mit einer opto-elektronischen Empfangseinrichtung (31) gekoppelt ist, wobei die Empfangseinrichtung (31) zwei Empfangsdioden (32, 39) aufweist, die in optischer Verbindung mit den Lichtleitern (7, 8) stehen, und einen Schaltungsteil (47) zur Summen- und Differenzbildung enthält, dessen einer ein bei der Summenbildung erzeugtes elektrisches Signal führender Ausgang (55) unter Bildung eines Regelkreises mit einem Steuereingang einer dem Schaltungsteil (47) vorgeordneten Verstärkereinheit (46) verbunden ist und dessen weiterer ein bei der Differenzbildung erzeugtes weiteres elektrisches Signal führender Ausgang (56) an eine Anzeigevorrichtung (58) angeschlossen ist, dadurch gekennzeichnet, daß die opto-elektronische Sendeeinrichtung (1) zwei abwechselnd impulsweise gesteuerte, gleichfarbiges Licht emittierende Sendedioden (2, 3) enthält, die mit jeweils einem der Lichtleiter (7, 8) gekoppelt sind, daß die Empfangsdioden (32, 39) mit den Lichtleitern (7, 8) über optische Koppelelemente (35, 36 ; 42, 43) derart verbunden sind, daß die eine Empfangsdiode (32) mit unmittelbar von den Sendedioden (2, 3) abgegebenem Licht und die andere Empfangsdiode (39) mit Licht beaufschlagt ist, das den Sensor (9) durchlaufen hat, daß die Lichtleiter (7, 8) an ihrem dem Sensor (9) zugewandten Ende in jeweils zwei Lichtleiterenden (10, 11 ; 15, 16) auslaufen, wobei das eine Lichtleiterende (10) des einen Lichtleiters (7) über eine Sammellinsenanordnung (13) und eine mit der Bewegung der Blende (23) sich öffnende Lichtdurchtrittsöffnung (29) im Sensor (9) mit einem Lichtleiterende (16) des weiteren Lichtleiters (8) und das andere Lichtleiterende (15) des weiteren Lichtleiters (8) über eine Sammellinsenanordnung (17) und eine mit der Bewegung der Blende (23) sich schließende weitere Lichtdurchtrittsöffnung (30) im Sensor (9) mit dem anderen Lichtleiterende (11) des einen Lichtleiters (7) optisch gekoppelt ist, und daß die eine Empfangsdiode (32) in einem Schaltkreis zur Amplitudenregelung der Sendedioden (2, 3) angeordnet ist und die andere Empfangsdiode (39) der Verstärkereinheit des Schaltungsteils (47) zur Summen- und Differenzbildung vorgeordnet ist.

2. Einrichtung nach Anspruch 1, dadurch gekennzeichnet, daß der anderen Empfangsdiode (39) eine weitere Empfangsdiode (61) zugeordnet ist, daß die andere Empfangsdiode (39) mit dem einen Lichtleiter (7) und die weitere Empfangsdiode (61) mit dem anderen Lichtleiter (8) optisch gekoppelt ist und daß die andere (39) und die weitere Empfangsdiode (61) über eine entsprechend der impulsweisen Steuerung der Sendedioden (2, 3) betätigte elektronische Umschaltanordnung (62) mit dem Eingang der Verstärkereinheit (46) verbunden sind.

3. Einrichtung nach Anspruch 1 oder 2, dadurch gekennzeichnet, daß die Sendedioden (2, 3) an einen Steuergenerator (4) angeschlossen sind, daß der Schaltungsteil (47) zur Summen- und Differenzbildung drei phasenempfindliche Gleichrichter (48, 49, 50) enthält und daß die Steuereingänge der phasenempfindlichen Gleichrichter (48, 49, 50) mit dem Steuergenerator (4) verbunden sind.

4. Einrichtung nach einem der vorangehenden Ansprüche, dadurch gekennzeichnet, daß die Blende (23) auf einem der physikalischen Größe entsprechend bewegbaren Prisma (22) gehalten ist und daß die Lichtleiterenden (10, 11 ; 15, 16) einer Seite des Prismas (22) gegenüberliegen.

5. Einrichtung nach Anspruch 4, dadurch gekennzeichnet, daß zwischen dem Prisma (22) und den Lichtleiterenden (10, 11 ; 15, 16) eine weitere Blende (26) räumlich fest angeordnet ist, die diametral einander gegenüberliegende, lichtundurchlässige Bereiche (27, 28) aufweist, und daß im Bewegungsbereich der beweglichen Blende (23) die beiden Lichtdurchtrittsöffnungen (29, 30) liegen.

6. Einrichtung nach einem der vorangehenden Ansprüche, dadurch gekennzeichnet, daß die einen Lichtleiterenden der beiden Lichtleiter (70, 72) einen kleineren Aperturwinkel als die anderen Lichtleiterenden aufweisen.

7. Einrichtung nach Anspruch 6, dadurch gekennzeichnet, daß alle Lichtleiterenden der Lichtleiter (70, 72) optisch gleich ausgebildet sind und daß den einen Lichtleiterenden jeweils eine Sammellinse und den anderen Lichtleiterenden jeweils eine Zerstreuungslinse vorgeordnet ist.

8. Einrichtung nach einem der Ansprüche 1 bis 5, dadurch gekennzeichnet, daß die einen Enden der beiden Lichtleiter (70, 72) einen kleineren Durchmesser als die anderen Enden der Lichtleiter aufweisen und in einem kürzeren Abstand von der jeweiligen Sammellinsenanordnung als die anderen Lichtleiterenden angeordnet sind.

9. Anwendung einer Einrichtung nach einem der Ansprüche 4 bis 8 zum Messen eines Druckes oder einer Druckdifferenz, dadurch gekennzeichnet, daß eine über zwei einen Innenraum begrenzende Trennmembranen gegen einen Meßfederstab (86) dem Druck oder der Druckdifferenz entsprechend verstellte Koppelstange (85) das Prisma (88) trägt und daß der Innenraum im Bereich des Prismas (88) nach außen durch eine druckfeste Glasdurchführung (89) abgeschlossen ist, bis an die die Lichtleiterenden von außen herangeführt sind.

## Claims

1. A device for measuring physical values with a sensor (9) having a diaphragm (23) controlled by the physical value which is to be measured, which is coupled via respective light conductors (7, 8) to an opto-electronic transmitting device (1) and an opto-electronic receiving device (31), where the receiving device (31) comprises two receiving diodes (32, 39) optically connected to the light conductors (7, 8), and contains a circuit component (47) for sum and difference formation, with one output (55) which carries an electrical signal produced during the sum formation connected to a control input of an amplifier unit (46) arranged prior to the circuit component (47) to form a regulating circuit, and with its other output (56) carrying a further electrical signal produced during the difference formation connected to a display device (58), characterised in that the opto-electronic transmitting device (1) contains two transmitting diodes (2, 3) controlled in alternation pulse-wise, to emit light of the same colour, each coupled to one of the light conductors (7, 8), the receiving diodes (32, 39) being connected to the light conductors (7, 8) via optical coupling elements (35, 36 ; 42, 43) in such manner that the one receiving diode (32) is acted upon by light directly emitted from the transmitting diodes (2, 3) whereas the other receiving diode (39) is acted upon by light which has passed through the sensor (9), that at their end which faces towards the sensor (9) the light conductors (7, 8) each terminate in two light conductor ends (10, 11 ; 15, 16), where the one light conductor end (10) of the one light conductor (7) is optically coupled to a light conductor end of the further light conductor (8) via a collector lens arrangement (13) and via a light aperture (29) in the sensor (9), which opens with the movement of the diaphragm (23), whereas the other light conductor end (15) of the further light conductor (8) is optically coupled to the other light conductor end (11) of the first light conductor (7) via a collector lens arrangement (17) and a further light aperture (30) in the sensor (9), which closes with the movement of the diaphragm (23), and that the first receiving diode (32) is arranged in a circuit for the amplitude regulation of the transmitting diodes (2, 3), and the other receiving diode (39) is arranged prior to the amplifier unit of the circuit component (47) for sum and difference formation.

2. A device as claimed in Claim 1, characterised in that the other receiving diode (39) is assigned a further receiving diode (61), that the other receiving diode (39) is optically coupled to the first light conductor (7) whereas the further receiving diode (61) is optically coupled to the other light conductor (8), and that the other (39) and the further receiving diode (61) are connected to the input of the amplifier unit (46) via an electronic switch-over arrangement (62) which is actuated in accordance with the pulsed control of the transmitting diodes (2, 3).

3. A device as claimed in Claim 1 or 2, characterised in that the transmitting diodes (2, 3) are connected to a control generator (4), that the circuit component (47) for sum and difference formation contains three phase-sensitive rectifiers (48, 49, 50), and that the control inputs of the phase-sensitive rectifiers (48, 49, 50) are connected to the control generator (4).

4. A device as claimed in one of the preceding Claims, characterised in that the diaphragm (23) is supported on a prism (22) which can be moved in accordance with the physical value, and that the light conductor ends (10, 11 ; 15, 16) are arranged opposite one side of the prism (22).

5. A device as claimed in Claim 4, characterised in that between the prism (22) and the light conductor ends (10, 11 ; 15, 16) a further diaphragm (26) is permanently arranged, which comprises zones (27, 28) arranged diametrically opposite one another and impermeable to light, and that the two light apertures (29, 30) are located in the movement zone of the mobile diaphragm (23).

6. A device as claimed in one of the preceding Claims, characterised in that the one light conductor ends of the two light conductors (70, 72) have a smaller aperture angle than the other light conductor ends.

7. A device as claimed in Claim 6, characterised in that all the light conductor ends of the light conductors (70, 72) are designed to be optically identical, and that the one light conductor ends are each preceded by a collector lens whereas the other light conductor ends are each preceded by a dispersing lens.

8. A device as claimed in one of Claims 1 to 5, characterised in that the one ends of the two light conductors (70, 72) have a smaller diameter than the other ends of the light conductors and are arranged at a shorter distance from the collector lens arrangement in question than the other light conductor ends.

9. Use of a device as claimed in one of Claims 4 to 8 for measuring a pressure or a pressure difference, characterised in that a coupling rod (85) adjusted in accordance with the pressure or pressure difference via two separating membranes which define an inner chamber relative to a measuring spring rod (86) bears the prism (88), and that the interior in the region of the prism (88) is sealed from the exterior by a pressure-resistant glass duct (89) which the light conductor ends approach from the exterior.

**Revendications**

1. Dispositif pour mesurer des grandeurs physiques avec un diaphragme (23), commandé par la grandeur physique à mesurer, d'un détecteur optique (9) qui est couplé, par l'intermédiaire de deux guides d'ondes de lumière (7, 8), à un dispositif émetteur (1) opto-électronique et à un dispositif récepteur (31) opto-électronique, le dispositif récepteur (31) comportant deux diodes réceptrices (32, 39) qui sont en liaison optique avec les guides d'ondes de lumière, et comporte un élément de circuit (47) pour la formation de la somme et de la différence, dont une première sortie (55), au niveau de laquelle apparaît un signal électrique produit lors de la formation de la somme, est reliée, avec formation d'un circuit de régulation, avec une entrée de commande d'une unité-amplificateur (46) montée en amont de l'élément de circuit (47), et dont une seconde sortie (56) au niveau de laquelle apparaît un second signal produit lors de la formation de la différence, est reliée à un dispositif indicateur (58), caractérisé par le fait que le dispositif émetteur (1) opto-électronique comporte deux diodes émettrices (2, 3) respectivement couplées à un guide d'onde de lumière (7, 8) qui sont commandées de façon impulsionnelle et qui émettent alternativement de la lumière d'une même couleur, que les diodes réceptrices (32, 39) sont reliées aux guides d'ondes de lumière (7, 8) et par l'intermédiaire d'éléments optiques de couplage (35, 36 ; 42, 43) de telle façon que l'une (32) des diodes réceptrices reçoit la lumière émise directement par les diodes émettrices (2, 3) et que l'autre (39) des diodes réceptrices reçoit la lumière ayant traversé le détecteur (9), que les guides d'ondes de lumière (7, 8) se terminent chacun, à leur extrémité voisine du détecteur (9), par deux extrémités de guides d'ondes de lumière (10, 11 ; 15, 16), l'extrémité du guide d'ondes de lumière (10) de l'un (7) des guides d'ondes de lumière étant accouplée optiquement, par l'intermédiaire d'un système de lentilles convergentes (13) et d'une ouverture de passage de la lumière (29) du détecteur (9), s'ouvrant avec le déplacement du diaphragme (23), à une extrémité de guide d'ondes de lumière (16) du second guide d'ondes de lumière (8), alors que l'autre extrémité du guide d'ondes de lumière (15) du second guide d'ondes de lumière (8) est couplée optiquement, par un dispositif à lentilles convergentes (17) et d'une seconde ouverture de passage de la lumière (30) dans le détecteur (9), à l'autre extrémité du guide d'ondes de lumière (11) du premier guide d'ondes de lumière (7), et que la diode réceptrice (32) est disposée dans un circuit de commutation pour le réglage de l'amplitude des diodes émettrices (2, 3), et l'autre diode réceptrice (39) est disposée en amont de l'unité-amplificateur de l'élément de circuit (47) pour la formation de la somme et de la différence.

2. Dispositif selon la revendication 1, caractérisé par le fait qu'à l'autre diode réceptrice (39) est associée une diode réceptrice supplémentaire (61), que ladite autre diode réceptrice (39) est couplée optiquement avec le guide d'ondes de lumière (8) et que l'autre diode réceptrice (39) et la diode réceptrice supplémentaire (61) sont reliées à l'entrée de l'unité-amplificateur (46), par l'intermédiaire d'un dispositif électronique de commutation qui est commandé en fonction de la commande impulsionnelle des diodes émettrices (2, 3).

3. Dispositif selon la revendication 1 ou 2, caractérisé par le fait que les diodes émettrices (2, 3) sont reliées à un générateur de commande (4), que l'élément de circuit (47) pour la formation de la somme et de la différence, comporte trois redresseurs (48, 49, 50) sensibles à la phase, et que les entrées de commande des redresseurs (48, 49, 50), sensibles à la phase, sont reliées au générateur de commande (4).

4. Dispositif selon l'une des revendications précédentes, caractérisé par le fait que le diaphragme (23) est monté sur un prisme (22) qui est susceptible d'être déplacé en fonction de la grandeur physique. et que les extrémités de guides d'ondes (10, 11 ; 15, 16) se situent en face d'un côté du prisme (22).

5. Dispositif selon la revendication 4, caractérisé par le fait qu'entre le prisme (22) et les extrémités de guides d'ondes (10, 11 ; 15, 16) est disposé, en position fixe dans l'espace, un second diaphragme (26) qui comporte des zones transparentes à la lumière (27, 28) qui se situent diamétralement l'une en face de l'autre, et que, l'ouverture de passage de la lumière (29, 30) se situe en face de l'étendue de déplacement du diaphragme mobile (23).

6. Dispositif selon l'une des revendications précédentes, caractérisé par le fait que les extrémités de guide d'ondes des deux guides d'ondes (70, 72) possèdent un angle d'ouverture qui est plus petit que celui des autres extrémités de guide d'ondes.

7. Dispositif selon la revendication 6, caractérisé par le fait que toutes les extrémités de guide d'ondes des guides d'ondes (70, 72) sont réalisées optiquement de façon identique, et qu'en amont de chacune des extrémités de guide d'ondes est prévue une lentille convergente alors qu'en amont de chacune des autres extrémités de guide d'ondes est prévue une lentille divergente.

8. Dispositif selon l'une des revendications 1 à 5, caractérisé par le fait que les premières extrémités des deux guides d'ondes de lumière (70, 72) comportent un diamètre qui est plus petit que celui des autres extrémités des guides d'ondes de lumière, et sont disposées à une distance plus courte du dispositif à lentilles convergentes concerné que les autres extrémités des guides d'ondes de lumière.

9. Mise en œuvre d'un dispositif selon l'une des revendications 4 à 8, pour mesurer une pression ou une différence de pression, caractérisé par le fait qu'une tige de couplage (85) déplacée en fonction de la pression ou de la différence de pression, par l'intermédiaire de membranes limitant une chambre intérieure, et à l'encontre d'une tige élastique de mesure (86), porte le prisme (88), et que la chambre intérieure est, au niveau du prisme (88), fermée vers l'extérieur par une traversée en verre résistant à la pression, et jusqu'à laquelle sont amenées, de l'extérieur, les extrémités de guides d'ondes de lumière.

FIG 2

FIG 1

FIG 3

FIG 4

FIG 5

FIG 6

FIG 7